# EUROPEAN PATENT APPLICATION

(11) **EP 4 084 430 A1**
(43) Date of publication of application: **02.11.2022**
(21) Application number: 21170924.1
(22) Date of filing: 28.04.2021
(51) Int. Cl.: H04L 29/06, G06F 21/55, G06F 21/71, B60W 30/00

(54) **SAFETY SYSTEM FOR VEHICLE CHASSIS SENSORS**

(71) Applicant: Aptiv Technologies Limited, St. Michael (BB)
(72) Inventor: HARS, Aurelien, 40470 Düsseldorf (DE); SHARMA, Avinash K, 42119 Wuppertal (DE)
(74) Representative: Vigand, Philippe

(57) **Abstract**

A safety system for a vehicle (100), the vehicle (100) having a tracking unit (130) and at least one chassis sensor (161, 162, 163), the safety system:
- receives sensor data from the chassis sensor (161, 162, 163),
- receives trusted data from the tracking unit (130),
- detects an inconsistency between the sensor data and the trusted data.

## Description

### TECHNICAL FIELD

The present disclosure relates to the field of a safety system and a method for a vehicle and a vehicle including the same.

### BACKGROUND

Modern vehicles such a cars, trucks, buses, trains or motorbikes comprises a plurality of embedded chassis sensors acquiring sensor data and sending the sensor data to an embedded computer that may perform tasks such as a driving assistance, advanced driving assistance or autonomous driving and thus takes critical autonomous driving and/or driving assistance decisions, for example decisions rated ASIL-D.

The safety of such vehicles thus relies heavily on the accuracy of the sensor data. However, chassis sensors are usually located at the periphery of a vehicle, for example in the wheels and in the brakes and are accessible to shocks, degradation, modification or replacement so that the corresponding sensor data may be altered consequently.

For example, an attacker may replace some of the chassis sensors by modified chassis sensors in order to take partial or full control of the vehicle. Alternatively, some chassis sensors may be defective or may be replaced by incompatible chassis sensors, which may alter functions performed by the embedded computer.

There is thus a need to improve the situation. More precisely, there is a need to increase the safety level of an autonomous or semi-autonomous vehicle by preventing or limiting any attack or malfunction originating from chassis sensors.

### SUMMARY

The present disclosure concerns a safety system for a vehicle, the vehicle having a tracking unit and at least one chassis sensor, the safety system:
- receives sensor data from the chassis sensor,
- receives trusted data from the tracking unit,
- detects an inconsistency between the sensor data and the trusted data.

Due to the tracking unit providing trusted data regarding the movement and/or the location of the vehicle, it is possible to verify the sensor data in order to detect any defect of the chassis sensor or a physical attack on the chassis sensor. In addition, the present safety system does not require an important modification of a vehicle digital architecture and the safety system can be integrated within existing architectures. Finally, the safety system is preferably on board the vehicle so that the inconsistency detection can be performed continuously and with limited computing resources.

Advantageously, the safety system extracts or computes:
- a value of a driving parameter from the sensor data,
- a trusted value of said driving parameter from the trusted data,
wherein the inconsistency is detected when said value differs from said trusted value by a predetermined threshold value.

Such a safety system allows a reliable detection of an inconsistency in a short time and with limited computing resources. The driving parameter may be a speed, an acceleration, a deceleration or a direction of the vehicle. Preferably, several driving parameters are considered for a more reliable inconsistency detection.

Advantageously, the safety system:
- computes a predicted location of the vehicle at time t+x from the sensor data and the trusted data at time t,
- obtains or computes a current location of the vehicle from the trusted data at time t+x,
wherein the inconsistency is detected when said predicted location differs from said current location by a predetermined threshold distance.

Such as safety system provides a higher-level method to detect an inconsistency and can be used as an alternative to the above method or as a second layer of safety to detect sophisticated attack.

Advantageously, the safety system includes:
- an interface unit which can be connected to the tracking unit and to the at least one chassis sensor, and
- a computing unit to detect the inconsistency.

Such a safety system is cost efficient and can be combined or included into a network unit of a vehicle, such as a network switch, a gateway or a router.

The present disclosure also relates to a vehicle embedded computer, including at least one embedded computing unit 'ECU' and a gateway able to connect the ECU to a physical network connecting the at least one sensor, wherein the above-described safety system is included in the gateway. The vehicle embedded computer allows an easy and cost efficient integration of the safety system in a modern vehicle.

Advantageously, the gateway blocks at least partially the sensor data from said chassis sensor when an inconsistency is detected or disconnects the chassis sensor. Such a vehicle embedded computer can thus provide a high level of safety to a vehicle even in the case of a malfunction or a physical attack of the chassis sensor(s).

Advantageously, the vehicle embedded computer includes the tracking unit. For example, the vehicle embedded computer is accommodated in a sealed or closed compartment of the vehicle and the tracking unit is accommodated into the compartment. The tracking unit can be soldered to a motherboard of the vehicle embedded computer or located on an interface card or daughtercard. The allows to prevent or limit any tempering of the tracking unit.

Advantageously, the tracking unit includes an inertial measurement unit 'IMU', for example including an accelerometer, a gyroscope and/or a compass.

Advantageously the tracking unit includes a vehicle positioning system, for example using satellite positioning and/or radio network positioning.

The present disclosure also relates to a vehicle including the above-described vehicle embedded computer or the above-described safety system, a physical network and the at least one chassis sensor connected to the ECU through the physical network.

The present disclosure also relates to a safety method for a vehicle having a tracking unit and at least one chassis sensor, the method including, the steps of:
- receiving sensor data from the chassis sensor,
- receiving trusted data from the tracking unit,
- detecting an inconsistency between the sensor data and the trusted data.

For example, the method steps are performed at a safety system or at a network unit, preferably on board of the vehicle. Such a method allows to enhance the safety level of a vehicle.

Advantageously, the safety method further includes the steps of extracting or computing:
- a value of a driving parameter from the sensor data,
- a trusted value of said driving parameter from the trusted data, and
- detecting the inconsistency when said value differs from said trusted value by a predetermined threshold value.

Advantageously, the safety method further includes the steps of:
- computing a predicted location of the vehicle at time t+x from the sensor data and the trusted data at time t,
- obtaining or computing a current location of the vehicle from the trusted data at time t+x,
- detecting the inconsistency when said predicted location differs from said current location by a predetermined threshold distance.

Advantageously, the safety method further includes the step of blocking at least part of the sensor data transmitted by said at least one chassis sensor or blocking said at least one chassis sensor. Preferably, the inconsistent sensor data are blocked, filtered, corrected or flagged.

The present disclosure also relates to a non-transitory computer readable medium including program instructions to perform the above-described safety method. Such a medium may be read by a embedded computing unit, a network unit or a cloud computing unit.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a schematic distributed digital architecture of a vehicle according to the present disclosure.
Figure 2 is a flow chart of a safety method according to the present disclosure.

### DETAILED DESCRIPTION

The present disclosure relates to the general field of vehicle safety and vehicle methods and covers all kind of vehicle, in particular motor vehicles such as cars, heavy duty vehicles, construction machines, trucks, buses, motorbikes and electric bicycles.

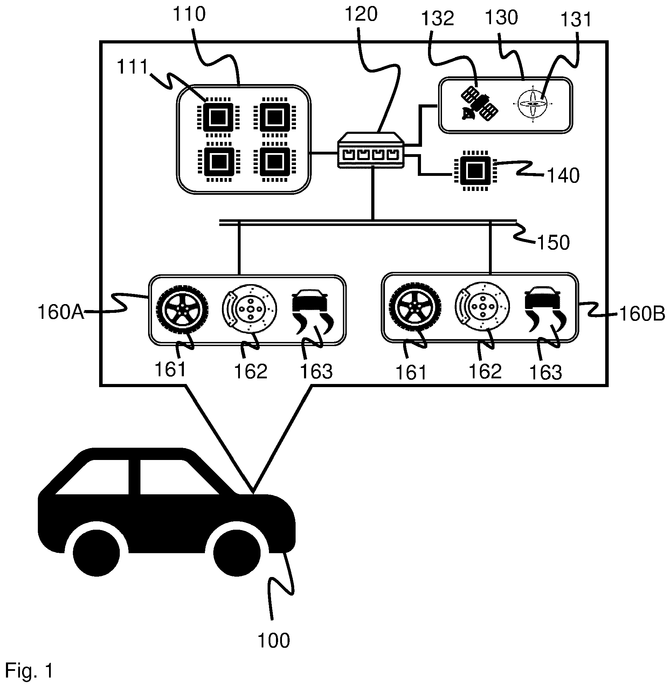

Fig. 1 illustrates a vehicle 100 includes a distributed digital system or network including an Embedded Computer Unit 'ECU' 110, an interface unit 120, a tracking unit 130, a computing unit 140, a physical network 150 and at least one sensor and preferably a plurality of sensors 161, 162, 163. The ECU 110, the interface unit 120, optionally the tracking unit 130 and the computing unit 140 may form a vehicle embedded computer in the sense of the present disclosure.

The Embedded Computer Unit 110 or ECU may include several electronic control modules 111, each electronic control module 111 being in charge of a specific set of tasks or functions in the vehicle. One or several electronic control modules 111 may be dedicated to autonomous driving and/or to driving assistance.

The electronic control modules 111 may further include an Engine Control Module (ECM), a Powertrain Control Module (PCM), a Transmission Control Module (TCM), a Brake Control Module (BCM or EBCM), a Central Control Module (CCM), a Central Timing Module (CTM), a General Electronic Module (GEM), a Body Control Module (BCM) and/or a Suspension Control Module (SCM). Other control module may be in charge of infotainment or comfort functions.

The interface unit 120 is an interface between the ECU 110 and the physical network 150, such as a gateway, network switch or router that routes data transmitted through the physical network 150 from and to the ECU 110, for example from and to the electronic control modules 111, allowing the electronic control modules 111 to interact with other vehicle elements or sensors and perform their functions.

A tracking unit 130 may be connected or included to the interface unit 120. Such a tracking unit 130 is adapted to provide trusted data regarding the movement and/or location of the vehicle 100. For example, the tracking unit 130 may include an inertial measurement unit or IMU 131 providing trusted data including force/acceleration (accelerometer) in 3 dimensions (X,Y,Z), angular velocity (Gyroscope) in 3 dimensions (pitch, roll, yaw), and/or magnetic fields (compass).

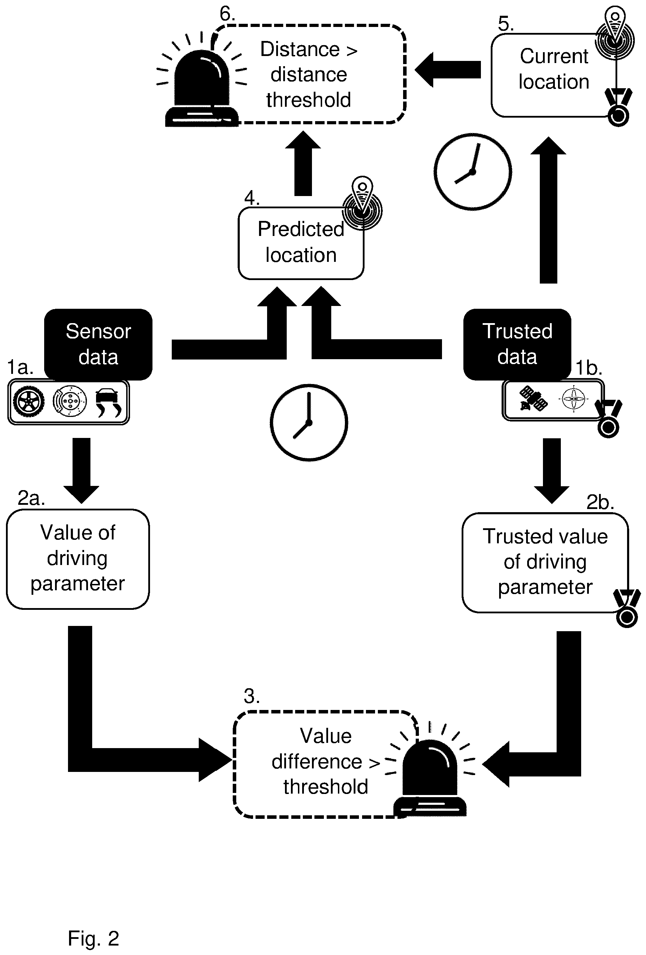

Alternatively or in combination, the tracking unit 130 may include a satellite positioning unit 132 including one or several antenna and using for example GPS, Galileo, Glonass or Baidu that may provide trusted data including the vehicle location, the vehicle altitude, the vehicle speed or the vehicle direction. A radio network positioning unit (not shown in Figs. 1 and 2) including dedicated antenna may also be included in the tracking unit 130, for example using the 3G, 4G, 5G or Wi-Fi networks to provide trusted data including an accurate or approximate location of the vehicle 100.

Consequently, the trusted data may include movement data for example including a force, a direction and/or an acceleration of the vehicle and/or location data, for example including a geographical location of the vehicle.

The tracking unit 130 may be provided with an integrated computing unit allowing to compute the raw data provided by the IMU 131, the satellite positioning unit 132 or the network positioning unit and/or the raw data may be transmitted directly to the interface unit 120 for computation by the computing unit 140 and /or by an electronic control module 111, in order to produce trusted data including processed or derived data such as a the vehicle speed or a driving direction.

The computing unit 140 may be integrated or connected to the interface unit 120, or part of the ECU 110. It may include one or several microprocessors and/or coprocessors as well as memory units and interfaces units, its function being detailed latter on. The interface unit 120 and the computing unit 140 may form a safety system according to the present disclosure and/or a gateway of the vehicle 100. The computing unit may also be implemented by software in the interface unit 120 and/or in one of the electronic control modules 111.

The physical network 150 is an on-board network including a simple or composite cable or several cables connecting physically the interface unit 120 to other digital units in the vehicle 100. In particular, the physical network 150 is connected to the at least one and preferably the plurality of chassis sensors. The chassis sensors may be grouped in different sensing zones 160A and 160B. For example, each sensing zone 160A, 160B may be managed by a zone controller (not shown). In any case, each sensing zone 160A, 160B includes at least one sensor and possibly several sensors.

In Fig. 1, each sensing zone 160A, 160B includes several chassis sensors such a wheel sensor 161, a brake sensor 162 and a yaw sensor 163. Other types of chassis sensors may also be considered such as a damping sensor or a wheel direction sensor. Each chassis sensor is connected directly to the physical network or through the zone controller and send sensor data to the ECU 110 through the interface unit 120.

The sensor data may include for example the number of wheel turns per time unit, the status of a brake system or an acceleration in a certain direction. The zone controller may also include a computing unit computing the raw sensor data to produced processed or derived sensor data before sending them to the interface unit 120.

In addition to the chassis sensors, other digital units may be connected on the physical network 150, for example other type of sensors such as in-vehicle sensors, switches, screens for example for the dashboard or the infotainment system, sound units, comfort units such an as air conditioner or connecting units such as a WI-FI unit, a cellular network unit or an on-board diagnostics (OBD) plug, as it is known by the person skilled in the art. The physical network 150 may include more than one cable or composite cable.

The physical network 150 may be of the type of, or compatible with a standard bus such as Controlled Area Network (CAN bus), Local Interconnect network (LIN), FlexRay or Ethernet. The physical network 150 may be the physical layer of a packet switched network such as TCP/IP network (Transmission Control Protocol/Internet Protocol).

Preferably, sensor data transmission is performed through the physical network 150 using data packets and/or data frames. Consequently, the interface unit 120 or gateway may route data packets or data frames between different elements, for example from the sensors and the switches to the electronic control modules 111 and from the electronic control modules 111 to the screens, the sound unit, the comfort units or the connecting units. Such routing may be performed by the computing unit 140 or another unit on the basis of routing tables.

In operation, Fig. 2 illustrates the interface unit 120 or the safety device receiving or intercepting data packets (i.e. sensor data) coming from the chassis sensors (step 1a.), for example through deep packet inspection. The interface unit 120 may also receive trusted data from the tracking unit 130 (step 1b.). The computing unit 140 may then assess the consistency between the sensor data and the trusted data (step 3.).

For example, the computing unit 140 may extract i.e. read from the sensor data and/or from the trusted data (steps 2a. and 2b) one or more values of one or more driving parameters, for example a speed, a driving direction, an acceleration, a deceleration, etc. Alternatively or in combination, the computing unit 140 may process or compute the sensor data and/or the trusted data in order to obtain the values of the driving parameters. The driving parameter may also include average values such as an average speed or extreme value such as a top speed over a certain time period.

An inconsistency (step 3) may be detected when the value of the driving parameter provided by the chassis sensor (i.e. extracted or processed from the sensor data) differs from the trusted value of the driving parameter provided by the tracking unit 130 (i.e. extracted or processed from the trusted data) by a value equal or above a certain threshold value. For example, a difference of 10 %, 20 % or 30 % may be detected as an inconsistency.

The threshold value may differ according to the specific driving parameter which is considered or according to the specific chassis sensor or tracking unit. For example, several threshold values may exist, each threshold value being linked with a specific response of the safety system.

Alternatively or in combination, the computing unit 140 may compute a predicted location at time t+x from the sensor data and the location of the vehicle obtained from the trusted data at time t (step 4.). At time t+ x, the vehicle current location may be obtained again from the trusted data (step 5.) and compared with the predicted location (step 6.). An inconsistency may be detected when the current location differs from the predicted location by a predetermined threshold distance or more, for example 20 m, 50 m or 80 m. Several threshold distances may be considered.

Alternatively or in combination, the inconsistency may be determined by machine learning. A set of training data combining normal sensor data with corresponding trusted data acquired during a real or simulated normal driving session with a vehicle may be used to train a machine learning model. Another set of training data acquired during one or several "abnormal" driving session may then be used to train the machine learning model with "abnormal" sensor data, i.e. sensor data having one or several inconsistencies with the trusted data. Any kind of adapted machine learning model may be used, such as neural networks.

Different inconsistency determinations may be performed in parallel, for example during different periods of time. For example, sensor data may be compared with trusted data coming from the IMU 131 every 300 ms. This may allow a quick detection of an inconsistency, with a limited amount of computing power. Then, a predicted location may be computed for example every minute and compared at t+1 min with the location obtained from the trusted data obtained from the satellite positioning unit 132. This may allow a certain redundancy in the safety system of the present disclosure. The inconsistency determination based on machine learning may be performed continuously, i.e. with all the data obtained from the chassis sensors or with sampled sensor data.

In case an inconsistency is detected, the interface unit 120 and/or the computing unit 140 i.e. the safety system, may perform a security action by identifying the chassis sensor(s) providing the inconsistent or abnormal sensor data and/or by preventing the inconsistent or abnormal sensor data to reach the ECU 110. The inconsistent chassis sensor(s) may then be switched off, isolated or blocked, in order to present the transmission of inconsistent sensor data to the ECU 110 and the safety system may act as a firewall. For example, the ECU 110 may rely partially or totally on the trusted data, instead of the chassis sensor data, at least temporarily.

The safety system may also filter the inconsistent sensor data, for example by removing the data packets transmitting the inconsistent sensor data. Alternatively, the data packets transmitting the inconsistent sensor data may be flagged as "inconsistent" before transmission to the ECU. The safety system may also correct the inconsistent data packets. For example, if a certain chassis sensor provides sensor data showing a stable and permanent inconsistency with regard to the trusted data, the inconsistent sensor data may be corrected by replacing the data packets transmitting the inconsistent sensor data by custom data packets including corrected sensor data.

The safety system may also forbid or block certain functions of the ECU, such as autonomous driving or one or several driving assistance functions. In the case the inconsistency is detected during autonomous driving, the driver may be required to take manual control of the vehicle or the vehicle may reach the closest safe place to park.

In addition, the safety system may transmit a warning to the ECU 110, to the driver or vehicle user and/or to a cloud security service through the connecting unit. For example, such a warning may include a certain default code, a warning light or message on the dashboard or a warning flag transmitted to the cloud security service. The cloud security service may send a specific safety policy to be implemented by the safety system, abnormal sensor data signatures or send a firmware update to be applied to the inconsistent chassis sensor(s), to the ECU 110 or to the safety system.

One or several different responses or security actions may be triggered according to the threshold value or threshold distance that has been crossed. For example, an inconsistency of +/- 5 % may trigger a warning message while an inconsistency of +/- 25 % may stop the vehicle.

In the case the inconsistent sensor data represent a predetermined amount of the sensor data provided by the chassis sensors, the safety system may switch to a safe mode and block all the sensor data, thus relying only on the trusted data. Such a safe mode may be used to drive to a safe place, for example.

The program instructions to perform the above method are stored in a storage module related to the vehicle 100, such as volatile memory, e.g., ROM, RAM, etc., and/or non-volatile memory, e.g., Flash, NAND, etc., that is permanently or removably integrated in the vehicle 100 or connectable to the vehicle 100, e.g., via the 'cloud', for example in the computing unit 140 and (or one or more electronic control modules 111. The program instructions can be executed by a computer, or a calculator, of the vehicle, such as the computing unit 140 or one or more electronic control modules 111 of the ECU 110.

The safety system according to the disclosure is not limited to the interface unit 120 and/or the computing unit 140 but may be a safety system physically independent from the ECU 111 and connected to the tracking unit 130 and to the physical network 150 or at least to the chassis sensors 161, 162, 163. The connection between the safety system and the tracking unit 130 is preferably direct but may also be performed though the physical network 150.

## Claims

1. A safety system for a vehicle (100), the vehicle (100) having a tracking unit (130) and at least one chassis sensor (161, 162, 163), the safety system:
- receives sensor data from the chassis sensor (161, 162, 163),
- receives trusted data from the tracking unit (130),
- detects an inconsistency between the sensor data and the trusted data.

2. The safety system according to claim 1, wherein the safety system extracts or computes:
- a value of a driving parameter from the sensor data,
- a trusted value of said driving parameter from the trusted data,
wherein the inconsistency is detected when said value differs from said trusted value by a predetermined threshold value.

3. The safety system according to claim 1 or 2, wherein the safety system:
- computes a predicted location of the vehicle at time t+x from the sensor data and the trusted data at time t,
- obtains or computes a current location of the vehicle from the trusted data at time t+x,
wherein the inconsistency is detected when said predicted location differs from said current location by a predetermined threshold distance.

4. The safety system according to any of claims 1 to 3, wherein the safety system includes:
- an interface unit (120) which can be connected to the tracking unit (130) and to the at least one chassis sensor (161, 162, 163), and
- a computing unit (140) to detect the inconsistency.

5. A vehicle embedded computer, including at least one embedded computing unit 'ECU' (110) and a gateway able to connect the ECU (110) to an on-board network connecting the at least one chassis sensor (161, 162, 163), wherein the safety system of any of claims 1 to 4 is included in the gateway.

6. The vehicle embedded computer of claim 5, wherein the gateway blocks at least partially the sensor data from said chassis sensor (161, 162, 163) when an inconsistency is detected or disconnects the chassis sensor (161, 162, 163).

7. The vehicle embedded computer of claim 5 or claim 6, further including the tracking unit (130).

8. The vehicle embedded computer of claim 7, wherein the tracking unit (130) includes an inertial measurement unit 'IMU', for example including an accelerometer, a gyroscope and/or a compass.

9. The vehicle embedded computer of claim 7 or claim 8, wherein the tracking unit (130) includes a vehicle positioning system, for example using satellite positioning and/or radio network positioning.

10. A vehicle (100) including the vehicle embedded computer of any of claims 5 to 9, a physical network (150) and the at least one chassis sensor (161, 162, 163) connected to the ECU (110) through the physical network (150).

11. A safety method for a vehicle (100) having a tracking unit (130) and at least one chassis sensor (161, 162, 163), the safety method including the steps of:
- receiving sensor data from the chassis sensor (161, 162, 163),
- receiving trusted data from the tracking unit (130),
- detecting an inconsistency between the sensor data and the trusted data.

12. The safety method according to claim 11, further including the steps of extracting or computing:
- a value of a driving parameter from the sensor data,
- a trusted value of said driving parameter from the trusted data, and
- detecting the inconsistency when said value differs from said trusted value by a predetermined threshold value.

13. The safety method according to any of claims 11 to 13, further including the steps of:
- computing a predicted location of the vehicle at time t+x from the sensor data and the trusted data at time t,
- obtaining or computing a current location of the vehicle from the trusted data at time t+x,
- detecting the inconsistency when said predicted location differs from said current location by a predetermined threshold distance.

14. The safety method according to claim 11 or claim 13, further including the step of blocking at least part of the sensor data transmitted by said at least one chassis sensor or blocking said at least one chassis sensor.

15. A non-transitory computer readable medium including program instructions to perform the safety method of any of claims 11 to 14.
